# EUROPEAN PATENT SPECIFICATION

(11) **EP 2 296 107 B1**
(45) Date of publication and mention of the grant of the patent: **01.08.2018**
(21) Application number: 10176051.0
(22) Date of filing: 09.09.2010
(51) Int. Cl.: G06K 15/00, G06K 15/02, G06F 3/12

(54) **Recording device and control method for a recording device**
Aufzeichnungsvorrichtung und Steuerverfahren für eine Aufzeichnungsvorrichtung
Dispositif d'enregistrement et procédé de contrôle pour dispositif d'enregistrement

(30) Priority: 15.09.2009 JP 2009213069
(43) Date of publication of application: 16.03.2011
(73) Proprietor: Seiko Epson Corporation, Tokyo 163-0811 (JP)
(72) Inventor: Eguchi, Isao, Nagano 392-8502 (JP); Tsuchiya, Norio, Nagano 392-8502 (JP); Watanabe, Kei, Nagano 392-8502 (JP)
(74) Representative: MERH-IP Matias Erny Reichl Hoffmann Patentanwälte PartG mbB

(56) References cited:
- EP-A2- 0 564 159
- US-A1- 2006 017 958
- US-A1- 2007 216 941

## Description

### BACKGROUND

### 1. Technical Field

The present invention relates to a recording device that operates according to commands, and to a method of controlling this recording device.

### 2. Related Art

A typical recording device executes a recording operation according to control commands that are received from a host computer or other host device. See, for example, Japanese Unexamined Patent Appl. Pub. JP-A-2006-301118.

The European Patent Application EP 0564159 A2 discloses an output apparatus and a method of a printer or display which receives commands from a host computer and executes subsequent data processes. The apparatus comprises a selector for analyzing data in a predetermined region in data received from the outside and for selecting adapted one of a plurality of emulation modes and a controller to control the selector in a manner such that in the case where the selector cannot specify to one emulation mode, the data in the predetermined region analyzed by the selector is changed and again analyzed. The data in the predetermined region indicates a predetermined data amount. The controller adds data excluding at least the data in the predetermined region to the data in the predetermined region analyzed by the selector and allows the selector to again analyze the resultant data.

The United States Patent Application US 2007/0216941 A1 describes an image processing device which is connectable to a host device through a network. In the image processing device, a storage unit stores an identifier capable of distinguishing the image processing device, a communication unit receives data from the host device, a data control unit analyzes the received data, and if the received data include information equivalent to the identifier, a processor executes processing specified by the received data. The host device can learn the identifier by broadcasting a query on the network, then place the identifier in a setting request broadcast on the network, and thereby make or modify network address settings in the image processing device from a remote location.

Such recording devices are also commonly customized in various ways for specific applications, and the commands that are used may differ in different specifications. For example, commands for accessing the kanji character set will be included in a printer designed for printing Japanese, but these commands may be omitted from a different model of the same printer sold in an English language market. Changing the commands that are built in to the recording device requires a specification change, or more specifically requires changing the firmware used in the recording device. As a result, even if the built-in commands differ only slightly, firmware common to plural different specifications cannot be used, the same number of firmware versions as specifications must be compiled, and producing and managing the different firmware versions becomes a problem.

### SUMMARY

A recording device according to at least one embodiment of the present invention can be made compatible with plural specifications without changing the firmware.

A first aspect of the invention is a recording device that is connectable to a host computer, according to claim 1.
Without changing the firmware, this aspect of the invention can set for each command according to the device specifications a parameter related to the executability of commands that are built in to the recording device. For example, when configuring the language-related specifications of the recording device, the settings can be configured so that only commands appropriate to the compatible language can be executed and commands that are not related to the language cannot be executed. This enables easily optimizing the commands that will be executed when configuring the device specifications, including the language setting of the recording device. In addition, the process of setting the command execution conditions can be executed in a specific mode and cannot be executed in other modes, and configuring the specifications as a result of an operating error can be prevented.

Preferably, the control unit discards the command if at least one decision is that the command process cannot be executed.

Commands that the recording device determines not to process can thus be discarded without being executed.

In another aspect of the invention, the information related to command executability stored in the storage unit is set by a configuration command.

Settings related to the executability of commands built in to the recording device can thus be set by means of the configuration command according to the device specifications.

In according to another aspect of the invention, the configuration command is based on the recording device specifications, including information related to a used language.

This aspect of the invention enables configuring the compatible language of the recording device and specifications related to accessories such as an automatic paper cutter.

The configuration command can preferably be executed in a specific mode.

This aspect of the invention enables setting a mode that can only be used by a specific operator, such as at the factory prior to shipping and when servicing the product.

In another aspect of the invention, moving between modes is enabled by a mode transition command. This enables easily changing the mode and configuring settings by command. A non-claimed example is a recording device that can connect to a host computer, and operates and records according to commands received from the host computer, including: a storage unit that stores information related to a plurality of commands and command processes including information
related to a command concerning a particular specification of the recording device, and command execution conditions setting the executability of each command; and a control unit that can execute a plurality of operating modes including a normal operating mode for executing processes including recording, and a configuration mode for configuring settings, moves from the normal operating mode to the configuration mode when a specific control command is received from the host computer, and when a command setting the command execution conditions is received when in the configuration mode, sets the command execution conditions according to the specified settings.

Without changing the firmware, this non-claimed aspect of the invention can change for each command according to the device specifications a parameter related to the executability of commands that are built in to the recording device. As a result, when configuring the language-related specifications of the recording device, for example, the settings can be configured so that only commands appropriate to the compatible language can be executed and commands that are not related to the language cannot be executed. This enables easily optimizing the commands that will be executed when configuring the device specifications, including the language setting of the recording device. In addition, the operation of setting the command execution conditions can be executed in a specific mode and cannot be executed in other modes, and configuring the specifications as a result of an operating error can be prevented.

Preferably, the command execution conditions also set execution conditions for commands other than the command related to a particular specification of the recording device.

This non-claimed aspect of the invention also enables setting the execution conditions of commands that are executed with no relationship to particular specifications such as language, and thus enables easily configuring the specifications of the recording device in detail.

Further preferably, the command execution conditions set the executability in each operating mode of each of the commands, including commands other than the command related to a particular specification of the recording device.

This non-claimed aspect of the invention enables setting the executability of each command in each operating mode and changing this setting, and can customize in detail the commands that are used in each operating mode of the recording device.

In another aspect of the invention, when a control command for changing to the configuration mode is received from the host computer, the configuration mode is entered if the received command combined with data received following the command are together determined to be a valid command.

This non-claimed aspect of the invention will not change to the configuration mode as a result of improper operations or operating errors because the configuration mode is entered only when both a transition command for entering the configuration mode and the data string following the transition command are received correctly. As a result, changing the command execution conditions as a result of illicit operations and operating errors can be prevented.

Another aspect of the invention is a control method for a recording device that is connectable to a host computer, according to claim 11. Without changing the firmware, this aspect of the invention can set for each command according to the device specifications a parameter related to the executability of commands that are built in to the recording device. As a result, when configuring the language-related specifications of the recording device, for example, the settings can be configured so that only commands appropriate to the compatible language can be executed and commands that are not related to the language cannot be executed. This enables easily optimizing the commands that will be executed when configuring the device specifications, including the language setting of the recording device. In addition, the process of setting the command execution conditions can be executed in a specific mode and cannot be executed in other modes, and configuring the specifications as a result of an operating error can be prevented. A non-claimed example is a control method for a recording device having a plurality of commands including a command for a particular specification, wherein a configuration mode for setting parameters that is different from the normal operating mode for executing processes including recording is entered when a specific control command is received, and if a command for setting the command execution conditions is received while in the configuration mode, the command execution conditions setting the executability of each command are changed according to the received configuration command.

Without changing the firmware, this aspect of the invention can set for each command a parameter related to the executability of commands that are built in to the recording device. As a result, when changing the language-related specifications of the recording device, for example, the settings can be configured so that only commands appropriate to the compatible language can be executed and commands that are not related to the language cannot be executed. This enables easily optimizing the commands that will be executed when configuring the device specifications, including the language setting of the recording device. In addition, the operation of setting the command execution conditions can be executed in a specific mode and cannot be executed in other modes, and configuring the specifications as a result of an operating error can be prevented.

Another non-claimed aspect of the invention is a program executed by a control unit to control a recording device having a plurality of commands including a command for a particular specification, wherein the control unit enters a configuration mode for setting parameters that is different from the normal operating mode for executing processes including recording when a specific control command is received, and if a command for setting the command execution conditions is received while in the configuration mode, configures the command execution conditions setting the executability of each command according to the received configuration command.

By executing this program, the control unit in this aspect of the invention can, without changing the firmware, set for each command a parameter related to the executability of commands that are built in to the recording device. As a result, when changing the language-related specifications of the recording device, for example, the settings can be configured so that only commands appropriate to the compatible language can be executed and commands that are not related to the language cannot be executed. This enables easily optimizing the commands that will be executed when configuring the device specifications, including the language setting of the recording device. In addition, the operation of setting the command execution conditions can be executed in a specific mode and cannot be executed in other modes, and configuring the specifications as a result of an operating error can be prevented.

### * Effect of at least of one embodiment of the invention

For each of the commands built in to a recording device, at least of one embodiment of the invention can change a setting related to command executability without changing the firmware, and can easily optimize command execution conditions to match the specifications.

Other objects and attainments together with a fuller understanding of the invention will become apparent and appreciated by referring to the following description and claims taken in conjunction with the accompanying drawings.

### BRIEF DESCRIPTION OF THE DRAWINGS

- FIG. 1: is a block diagram showing the configuration of a printing system according to a preferred embodiment of the invention.
- FIG. 2: schematically describes operating mode changes in a printer.
- FIG. 3: shows an example of command configuration information.
- FIG. 4: is a flow chart of printer operation.
- FIG. 5: is a sequence diagram showing an example of printing system operation.

### DESCRIPTION OF EMBODIMENTS

A preferred embodiment of the present invention is described below with reference to the accompanying figures.

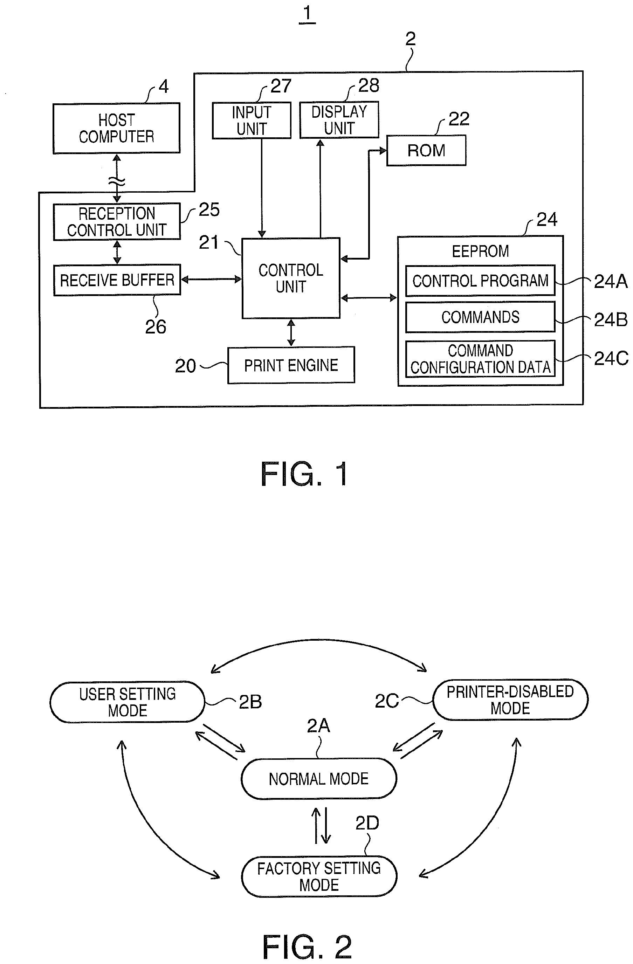

FIG. 1 is a block diagram showing the configuration of a printing system 1 according to a preferred embodiment of the invention.

This printing system 1 has a host computer 4 connected to a printer 2 as an example of a recording device, and is a system in which the printer 2 prints (records) content such as text and images according to commands and data from the host computer 4.

The printer 2 has a print engine 20 that actually pints on a recording medium, a control unit 21 that controls the printer 2, ROM 22 that stores a basic control program that is the firmware executed by the control unit 21, EEPROM 24 that stores the control program 24A executed by the control unit 21, commands 24B, and command configuration data 24C, a reception control unit 25 that controls reception of commands sent from the host computer 4, a receive buffer 26 that temporarily stores commands and data received from the host computer 4, an input unit 27 with operating buttons, for example, and a display unit 28 such as a liquid crystal display panel.

The control unit 21 has a CPU and internal memory that temporarily stores the executed program and data, for example, functions as a microcontroller, and executes a basic control program stored in ROM 22 and the control program 24A stored in EEPROM 24.

ROM 22 nonvolatilely stores a basic control program that is executed by the control unit 21 to initialize and control various parts of the printer 2, and data related to the basic control program. A device ID that is unique to the particular printer 2, and a specification ID that is unique to a particular printer 2 specification, are assigned to each printer 2, and the device ID and specification ID are stored in ROM 22. The device ID and specification ID are sent to the host computer 4 in response to a request command, and the host computer 4 can identify an individual printer 2 from the device ID and can identify the printer 2 specification from the specification ID.

EEPROM 24 is a rewritable nonvolatile storage device that stores various types of programs and data, including the control program 24A, commands 24B including commands and information related to executing the commands, and command configuration data 24C.

The reception control unit 25 implements a specific communication protocol to communicate with the host computer 4, receive signals sent from the host computer 4 according to the communication protocol, and sequentially decode received signals to extract and store commands and data in the receive buffer 26. The reception control unit 25 includes a communication circuit and connector to which a communication cable is connected, or a wireless communication circuit and antenna, for example.

The receive buffer 26 is a temporary storage device that sequentially stores commands and data output from the reception control unit 25, and the commands and data stored in the receive buffer 26 are acquired by the control unit 21 and used for control and printing.

The print engine 20 generates the text or image to be printed on the recording medium based on commands and data sent from the host computer 4 as controlled by the control unit 21, and controls the printing mechanism of the printer 2 to print on the recording medium. More specifically, the printer 2 has a print head that deposits ink or toner on the printing surface of the recording medium (including roll paper, cut sheet media, and photocopier paper), which may be paper or a plastic medium, or a print head that applies heat to the printing surface of the recording medium, a print head drive mechanism that causes the print head to move relative to the recording medium, and a transportation mechanism for conveying the recording medium, and the print head and other mechanisms are controlled by the print engine 20.

FIG. 2 schematically describes changes in the operating mode of the printer 2.

As shown in FIG. 2, the printer 2 can operate in four operating modes, a normal mode 2A, a user setting mode 2B, a printer-disabled mode 2C, and a factory setting mode 2D. The printer 2 can switch directly between each of the four operating modes as shown in FIG. 2. More specifically, commands for shifting to each of the other three operating modes are readied in all of the operating modes, and the printer 2 shifts to the specified command when one of these commands is received.

The normal mode 2A is the operating mode for printing on the recording medium according to commands received from the host computer 4. Commands that can be executed in the normal mode 2A include commands specifying particular operations for the print engine 20, ID acquisition commands for checking the device ID or specification ID of the printer 2, and commands for going to another operating mode.

The user setting mode 2B is the operating mode in which the user sets configurable options. For example, in this mode the size of the recording medium may be set using the input unit 27 and the setting stored in EEPROM 24 so that content is printed in an area within the set size. Commands such as the foregoing ID acquisition commands and commands to switch to another operating mode can also be executed in the user setting mode 2B.

In the printer-disabled mode 2C operation of the printer 2 is disabled, and normal commands such as the ID acquisition command cannot be executed. Only a command for returning from the printer-disabled mode 2C to the previous operating mode, such as a command to cancel the printer-disabled mode 2C, can be executed in the printer-disabled mode 2C.

The factory setting mode 2D is an operating mode for changing the printer 2 settings, but unlike the user setting mode 2B is only used in special circumstances such as prior to factory shipping or during maintenance by a service technician. Functions that can have a major effect on printer 2 operation if configured incorrectly can be set in the factory setting mode 2D. For example, the content of the command configuration data 24C can only be changed when in the factory setting mode 2D in the printer 2 according to this embodiment of the invention. The ID acquisition command, a command for setting command execution conditions, and commands for changing to another operating mode can also be executed in the factory setting mode 2D.

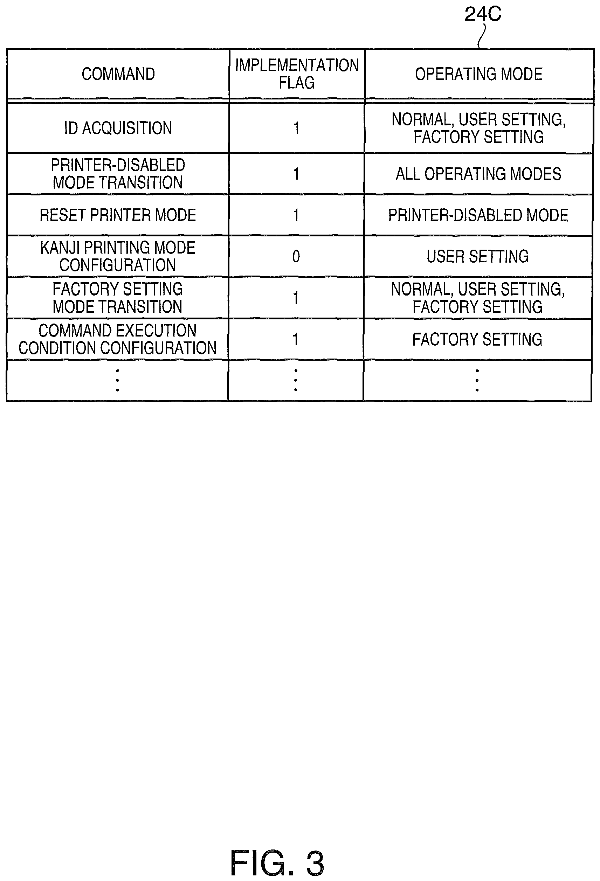

FIG. 3 shows an example of the command configuration data 24C stored in EEPROM 24.

For all of the commands incorporated in the printer 2, an implementation flag indicating the implemented/unimplemented (compatibility/incompatibility) status of a command based on the specifications of the printer 2, and the operating modes in which each command can be used, are set in the command configuration data 24C, which correspond to command execution conditions. Commands for which the implementation flag is set to 1 can be executed by the printer 2, and commands for which the implementation flag is set to 0 are built in to the printer 2 but are treated as commands that are not implemented and cannot be executed. If a command for which the implementation flag is set to 0 is received from the host computer 4, the control unit 21 simply discards the command.

Note that while not shown in FIG. 3 common commands such as a start printing command and a paper feed command for advancing the recording medium are also set in the command configuration data 24C.

In the example shown in FIG. 3, the implementation flag is set to 1 for the ID acquisition command that tells the printer 2 to send the device ID and specification ID of the printer 2 and the printer 2 status; a printer-disabled mode transition command that tells the printer 2 to enter the printer-disabled mode 2C; a factory setting mode transition command that tells the printer 2 to enter the factory setting mode 2D; and a command execution condition configuration command that changes the settings in the command configuration data 24C. However, the implementation flag is set to 0 for the kanji printing mode configuration command that is used to configure printing kanji (including setting and cancelling a double character width setting, setting and cancelling a double character height setting, and setting and cancelling underlining), and the kanji printing mode configuration command is considered to be unimplemented. Therefore, when configured as shown in FIG. 3, any kanji printing mode configuration command sent by the host computer 4 is simply discarded by the printer 2.

Note that "implemented" as used herein means that the command is compatible with the printer specifications, and "unimplemented" means that the command is outside the scope of the printer specifications.

The factory setting mode 2D is set as the only operating mode in which the command execution condition configuration command can be executed. As a result, if the printer 2 is in any operating mode other than the factory setting mode 2D, the command execution condition configuration command will be discarded if received by the printer 2.

The user setting mode 2B is set as the only operating mode in which the kanji printing mode configuration command can be executed. As a result, even if the implementation flag of the kanji printing mode configuration command is set to 1, the printer 2 discards the command in every operating mode other than the user setting mode 2B.

The only command that can be executed in the printer-disabled mode 2C is a reset [printer-disabled mode] command that resets the printer from the printer-disabled mode 2C to the previous operating mode. More specifically, commands other than this reset command are discarded in the printer-disabled mode 2C.

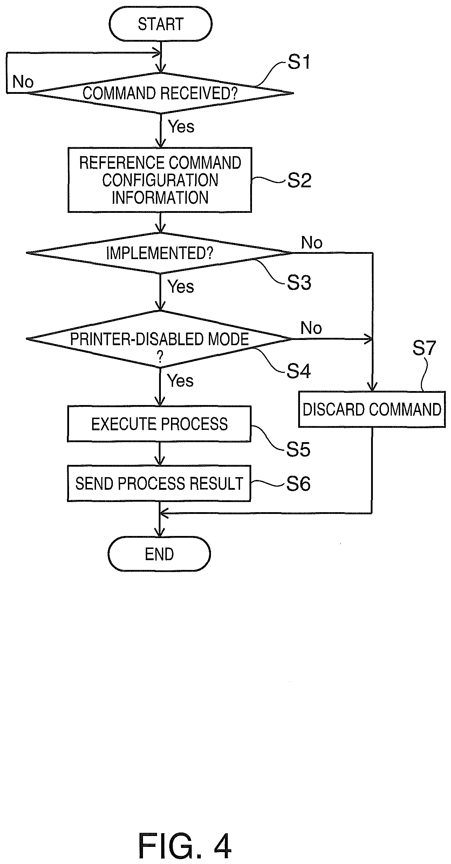

FIG. 4 is a flow chart showing the operation of the printer 2.

When the control unit 21 of the printer 2 starts the process (START), it monitors the reception state of the reception control unit 25 and waits to receive a command sent from the host computer 4 (step S1). Command signals are sent from the host computer 4 based on a specific communication protocol, and when reception of a command into the receive buffer 26 is detected (step S1 returns Yes), the control unit 21 gets the settings for the received command from the command configuration data 24C (step S2).

The control unit 21 then determines if the received command is configured as an implemented command (step S3). More specifically, the control unit 21 reads the implementation flag of the received command and determines that the command is implemented if the implementation flag is set to 1 (step S3 returns Yes). If the control unit 21 determines the received command is implemented, it reads the settings in the command configuration data 24C and determines if the received command can be executed in the current operating mode of the printer 2 (step S4).

If the control unit 21 determines that the current operating mode of the printer 2 is set as an operating mode in which the received command can be executed (step S4 returns Yes), it executes the process of the received command (step S5). Depending upon the content of the received command, the control unit 21 sends the process result through the reception control unit 25 to the host computer 4 (step S6), and ends the process (END). The control unit 21 then returns to the beginning (START) and repeats the process from step S1.

If the implementation flag of the received command is set to 0 and the command is determined to be unimplemented (step S3 returns No), or if the received command cannot be executed in the current operating mode of the printer 2 (step S4 returns No), the control unit 21 discards (kills) the received command (step S7) and ends the process (END). The control unit 21 then returns to the beginning (START) and repeats the process from step S1.

As described above, when a command is received from the host computer 4, the printer 2 determines whether or not the received command can be executed based on the settings in the command configuration data 24C. More specifically, if the received command is set as executable by the implementation flag, and an operating mode in which the received command can be executed is the current operating mode of the printer 2, the printer 2 executes the process specified by the command.

If the command execution condition configuration command is received in the factory setting mode 2D, the control unit 21 changes the settings in the command configuration data 24C according to the specific configuration content of the data string (argument) that is sent following the command execution condition configuration command. See FIG. 2 and FIG. 3.

The command execution condition configuration command is specifically indicated by the ASCII text string "RS_(_Z", and a data string indicating the configuration content follows this text string. This data string includes information defining the length of the data string, information about the command to be reconfigured in the command configuration data 24C, information about the parameter settings to be changed, and information identifying the setting after it is changed.

The configuration of the command configuration data 24C can thus be changed in the factory setting mode 2D by sending a command execution condition configuration command from the host computer 4. For example, the kanji printing mode configuration command that sets kanji printing conditions is useful when the printer 2 specification includes Japanese or Chinese compatibility, but is unnecessary when the specification is for English or Spanish. Therefore, to change the printer 2 from a Japanese specification to an English specification, the printer 2 can be configured to not accept unnecessary kanji printing configuration commands by setting the implementation flag of the kanji printing mode configuration command to 0. To change the printer 2 from an English specification to a Japanese specification, the printer 2 can be configured to use the kanji printing mode configuration command by changing the implementation flag of the kanji printing mode configuration command to 1.

Because the settings of the command configuration data 24C can thus be easily changed, the languages with which the printer 2 is compatible can be changed without changing the firmware by simply changing the implemented/unimplemented setting of the language command and the operating mode in which the language command can be executed, and language-related command execution conditions can thus be optimized (enabled/disabled) according to the printer 2 specifications.

Note that when the factory setting mode transition command is received, the control unit 21 changes to the factory setting mode 2D only if both the text string rendering this command and the data string following this text string are correct.

The factory setting mode transition command is identified, for example, by the ASCII text string RS_Z_fn, and this text string is followed by a data string d1...d6. The data string d1...d6 is data equivalent to MODE IN indicating a switch to the factory setting mode. If this data string is MODE OUT, the command says to reset from the factory setting mode to the previous operating mode. (Note that this data string is also expresses a command.)
If the text string stored in the receive buffer 26 is RS_Z_fn, the control unit 21 recognizes the text string as a factory setting mode transition command, and determines that a correct factory setting mode transition command was received and switches to the factory setting mode 2D according to the command if the data string MODE IN (or a data string d1 ...d6 corresponding to MODE IN) is stored in the receive buffer 26 following this text string. Because the factory setting mode 2D is not entered when the string RS_Z_fn is received unless this string is followed by the correct data string, the factory setting mode 2D will not be entered by mistake. As a result, important configuration settings will not be erroneously changed by accidentally entering the factory setting mode 2D, which can greatly affect printer 2 operation.

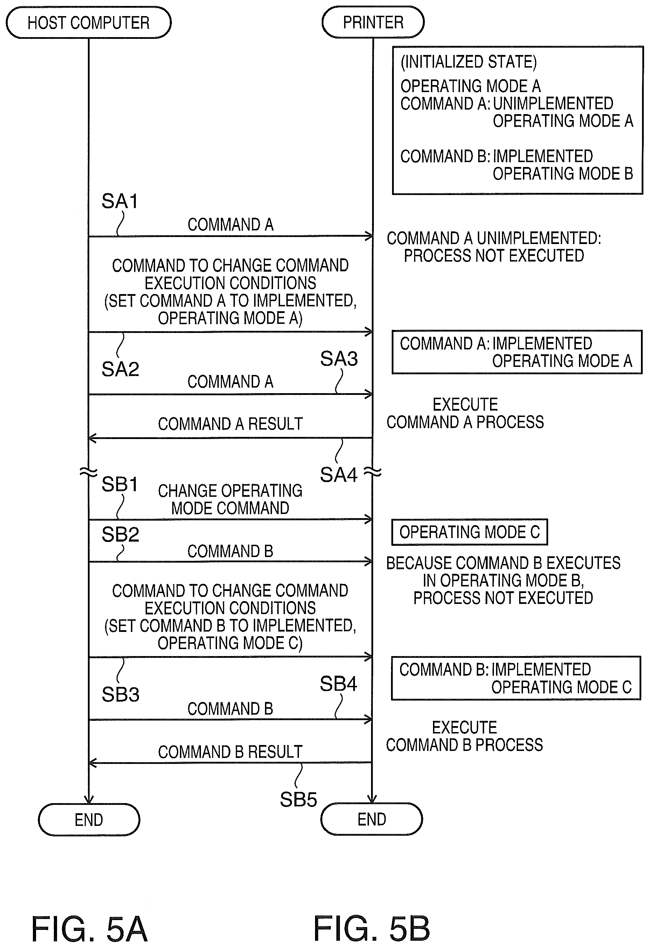

FIG. 5 is a sequence diagram showing a specific example of printing system 1 operation. FIG. 5 (A) shows the operation of the host computer 4 side, and FIG. 5 (B) shows the operation of the printer 2 side.

In the operating example shown in FIG. 5, the operating mode of the printer 2 is operating mode A, and of the commands built in to (available in) the printer 2, the implementation flag for command A is set to unimplemented and the implementation flag of command B is set to implemented. The operating mode in which command A can be executed is operating mode A, and the operating mode in which command B can be executed is operating mode B.

When command A is sent from the host computer 4 to the printer 2 (step SA1), the printer 2 refers to the command configuration data 24C. Because command A is unimplemented in this example, the printer 2 does not execute and simply discards command A.

When the command execution condition configuration command is sent from the host computer 4 to the printer 2 (step SA2), and this command sets the command A implementation flag to implemented so that command A can be executed in operating mode A, the printer 2 changes the settings of the command configuration data 24C, sets the command A implementation flag to implemented, and enables execution in operating mode A.

When command A is sent again from the host computer 4 to the printer 2 (step SA3), the printer 2 again reads the command configuration data 24C. Because command A is now implemented and can be executed in operating mode A, the printer 2 executes the process of command A and sends the result of command execution to the host computer 4 (step SA4).

A command for changing to operating mode C is then sent from the host computer 4 to the printer 2 (step SB1), and after the printer 2 operating mode changes to operating mode C in response to this command, command B is sent from the host computer 4 to the printer 2 (step SB2) and the printer 2 again references the command configuration data 24C. Because command B cannot be executed in operating mode C, the printer 2 discards and does not execute command B.

When a command execution condition configuration command is then sent from the host computer 4 to the printer 2 (step SB3), and this command specifies setting the command B implementation flag to implemented and enables executing command B in operating mode C, the printer 2 changes the settings in the command configuration data 24C to set the command B implementation flag to implemented and enable executing command B in operating mode C.

When command B is then sent again from the host computer 4 to the printer 2 (step SB4), the printer 2 reads the command configuration data 24C. Because this time command B is implemented and can be executed in operating mode C, the printer 2 executes the process of command B and sends the result of command execution to the host computer 4 (step SB5).

Note that in the example shown in FIG. 5 the printer 2 operating mode is changed to the factory setting mode 2D before the command execution condition configuration command is sent, and a process that resets the operating mode of the printer 2 from the factory setting mode 2D is executed after the command execution condition configuration command is sent, but the steps related to these temporary operating mode changes are not shown in the figure.

As described above, a printer 2 according to this embodiment of the invention that is connected to a host computer 4 and operates and records according to commands received from the host computer 4 can have a plurality of built-in (compatible) commands, including commands related to specific languages; stores command configuration data 24C indicating whether each command can be executed or not; can operate in a plurality of operating modes including a normal mode 2A for recording operations and a factory setting mode 2D for configuration; enters the factory setting mode 2D only when a specific control command is received from the host computer 4; and changes the command configuration data 24C according to the received command execution condition configuration command when a command execution condition configuration command specifying settings in the command configuration data 24C is received while in the factory setting mode 2D.

The settings of command configuration data 24C related to the executability of commands built in to the printer 2 can thus be changed for individual commands without changing the firmware. As a result, when the language setting of the printer 2 is changed, for example, the printer 2 can be configured to execute only commands that are appropriate to the specified language, and to not execute commands that are not related to the specified language. Command executability can thus be easily optimized to match the specifications when the specifications are changed, such as to change a language with which the printer 2 is compatible.

Furthermore, because the command execution condition configuration command itself is set in the command configuration data 24C so that it can be executed only in the factory setting mode 2D, the command configuration data 24C cannot be changed accidentally in another operating mode, and changing the command execution conditions as a result of an operating error can be prevented.

Furthermore, because the command configuration data 24C also sets execution conditions for commands other commands related to specific languages, the execution conditions can also be set for commands that are executed irrespective of language, and printer 2 specifications can therefore be easily changed in detail.

In addition, because the command configuration data 24C also sets the operating modes in which each command can be executed, command executability can be set specifically for each operating mode, and the command execution conditions of the printer 2 can be customized in detail.

Yet further, because the factory setting mode 2D is entered when a command for entering the factory setting mode 2D is received from the host computer 4 only if the received command and the data string received after the command together are determined to be a valid command, the factory setting mode 2D will not be entered as a result of operating errors or improper operation. Changing command execution conditions as a result of operating errors or improper operations can therefore be prevented.

It will be obvious to one with ordinary skill in the related art that the foregoing embodiment is simply one specific example of the invention, and the invention is not limited thereto. For example, the foregoing embodiment is described as changing the implementation flag of a kanji printing mode configuration command in the command configuration data 24C by asserting a command execution condition configuration command, but the invention is not so limited, various other command settings can be changed, and language-related commands are not limited to a kanji printing mode configuration command. Settings related to printing, such as a page command that prints in page units, and settings related to printer 2 accessories such as an automatic paper cutter, are also possible.

Furthermore, information describing command execution conditions in the command configuration data 24C is not limited to an implementation flag and operating mode information. For example, when a plurality of host computers are connected to a single printer over a communication network, information setting command executability for each host computer may also be included. Yet further, a flag does not need to be used as the information setting the implemented/unimplemented state of each command in the command configuration data 24C, and specific configuration details can be changed as desired. The recording device to which the invention can be applied is also not specifically limited and may be any printer that operates according to commands, including inkjet printers, dot impact printers, laser printers, and dye sublimation printers, printers that form text and images by other methods, and printers that are incorporated into other devices.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. A recording device that is connectable to a host computer (4) to receive commands and data from the host computer (4), comprising:
a storage unit (24) that stores
- information specifying a plurality of commands and related command processes based on the plurality of commands,
- information indicating the executability of each command, and
- information specifying a plurality of operating modes of the recording device and indicating in which operating mode or modes a specific command can be executed; and
a control unit (21) that is responsive to a command being received from the host computer (4) to reference the information stored in the storage unit (24) indicating the command executability of the received command, to determine whether or not to execute a process corresponding to the received command,
to reference the information stored in the storage unit (24) specifying the operating modes and to determine if the received command can be executed in the current operating mode ,
the control unit (21) being further responsive to the result of both determinations being that the command process can be executed, to reference the information stored in the storage unit (24) related to the command process and to execute the related process based on the received command.

2. The recording device described in claim 1, wherein the control unit (21) is adapted to discard the command if at least one of the determinations is that the command process cannot be executed.

3. The recording device described in claim 1, wherein the control unit (21) is responsive to a configuration command to set the information related to command executability stored in the storage unit (24).

4. The recording device described in claim 3, wherein the configuration command is based on the recording device specifications, including information related to a used language.

5. The recording device described in claim 3, wherein the command executability of the configuration command is such that the configuration command can be executed only in a specific operating mode.

6. The recording device described in claim 1, wherein moving between operating modes is enabled by an operating mode transition command.

7. The recording device according to any one of claims 1 to 6, wherein the storage unit (24) stores information related to a plurality of commands and command processes including information related to a command concerning a particular specification of the recording device, and the control unit (21) is adapted to
execute a plurality of operating modes including a normal operating mode for executing processes including recording, and a configuration mode for configuring settings,
switch from the normal operating mode to the configuration mode in response to a specific control command being received from the host computer (4), and
respond to a command setting the command execution conditions being received when in the configuration mode, to set and store the command execution conditions according to the specified settings in the storage unit (24).

8. The recording device described in claim 7, wherein the command execution conditions also include execution conditions for commands other than the command related to a particular specification of the recording device.

9. The recording device described in claim 8, wherein the command execution conditions set the executability in each operating mode of each of the commands, including commands other than the command related to a particular specification of the recording device.

10. The recording device described in claim 7, wherein the device is responsive to a control command from the host computer (4) for changing from the normal operating mode to the configuration mode, by entering the configuration mode if the received command combined with data received following the command are together determined to be a valid command.

11. A control method for a recording device that is connectable to a host computer (4) to receive commands and data from the host computer (4), comprising as steps executed when a command is received from the host computer (4) the steps of:
a) referencing information indicating the command executability of the received command;
b) determining whether or not to execute a process based on the received command;
c) referencing information specifying operating modes of the recording device and
d) determining if the received command can be executed in the current operating mode;
and
if the result of both determining steps b) and d) is that the received command can be executed,
e) referencing information related to the command process and executing the related process based on the command.

12. The control method described in claim 11, further comprising a step of:
discarding the command if at least one of said determining steps b) and d) is that the command process cannot be executed.

13. The control method for a recording device described in claim 11, wherein:
the information related to command executability is set by a configuration command.

14. The control method for a recording device described in claim 11, wherein:
the configuration command is based on the recording device specifications, including information related to a used language.

15. The control method for a recording device described in claim 11, wherein:
the configuration command can be executed only in a specific operating mode.

16. The control method for a recording device described in claim 11, wherein:
moving between operating modes is enabled by a mode transition command.

## Patentansprüche

1. Aufzeichnungsvorrichtung, die mit einem Hostrechner (4) verbunden werden kann, um Befehle und Daten vom Hostrechner (4) zu empfangen, umfassend:
eine Speichereinheit (24), die speichert:
- Information, die eine Vielzahl von Befehlen und zugehörigen Befehlsprozessen auf Grundlage der Vielzahl der Befehle angibt,
- Information, die die Ausführbarkeit jedes Befehls anzeigt, und
- Information, die eine Vielzahl von Betriebsmodi der Aufzeichnungsvorrichtung angibt und anzeigt, in welchem Betriebsmodus oder in welchen Betriebsmodi ein bestimmter Befehl ausgeführt werden kann;
und
eine Steuereinheit (21), die auf einen vom Hostrechner (4) empfangenen Befehl reagiert, um auf die in der Speichereinheit (24) gespeicherte Information, die die Befehlsausführbarkeit des empfangenen Befehls anzeigt, Bezug zu nehmen, um zu ermitteln, ob sie einen dem empfangenen Befehl entsprechenden Prozess auszuführen hat oder nicht,
um auf die in der Speichereinheit (24) gespeicherte Information, die die Betriebsmodi angibt, Bezug zu nehmen und zu ermitteln, ob der empfangene Befehl im aktuellen Betriebsmodus ausgeführt werden kann,
wobei die Steuereinheit (21) ferner auf das Ergebnis beider Ermittlungen, dass der Befehlsprozess ausgeführt werden kann, reagiert, um auf die in der Speichereinheit (24) gespeicherte, mit dem Befehlsprozess verbundene Information Bezug zu nehmen und den zugehörigen Prozess auf Grundlage des empfangenen Befehls auszuführen.

2. Aufzeichnungsvorrichtung nach Anspruch 1, wobei die Steuereinheit (21) ausgelegt ist, den Befehl zu verwerfen, falls mindestens eine der Ermittlungen ergibt, dass der Befehlsprozess nicht ausgeführt werden kann.

3. Aufzeichnungsvorrichtung nach Anspruch 1, wobei die Steuereinheit (21) auf einen Konfigurationsbefehl reagiert, um die in der Speichereinheit (24) gespeicherte, mit der Befehlsausführbarkeit verbundene Information festzulegen.

4. Aufzeichnungsvorrichtung nach Anspruch 3, wobei der Konfigurationsbefehl auf den Aufzeichnungsvorrichtungsangaben basiert, die eine mit einer verwendeten Sprache verbundene Information umfassen.

5. Aufzeichnungsvorrichtung nach Anspruch 3, wobei die Befehlsausführbarkeit des Konfigurationsbefehls so ist, dass der Konfigurationsbefehl nur in einem bestimmten Betriebsmodus ausgeführt werden kann.

6. Aufzeichnungsvorrichtung nach Anspruch 1, wobei ein Wechseln zwischen Betriebsmodi durch einen Befehlsmodus-Übergangsbefehl ermöglicht wird.

7. Aufzeichnungsvorrichtung nach einem der Ansprüche 1 bis 6, wobei die Speichereinheit (24) eine mit einer Vielzahl von Befehlen und Befehlsprozessen verbundene Information speichert, die eine Information umfasst, die mit einem Befehl verbunden ist, der eine bestimmte Angabe der Aufzeichnungsvorrichtung betrifft, und die Steuereinheit (21) ausgelegt ist,
eine Vielzahl von Betriebsmodi auszuführen, die einen normalen Betriebsmodus zum Ausführen von Prozessen einschließlich von Aufzeichnen und einen Konfigurationsmodus zum Konfigurieren von Einstellungen umfassen,
vom normalen Betriebsmodus als Reaktion darauf, dass ein bestimmter Steuerbefehl vom Hostrechner (4) empfangen wird, in den Konfigurationsmodus zu wechseln und
auf einen Befehl zu reagieren, der die Befehlsausführungsbedingungen festlegt, die im Konfigurationsmodus empfangen werden, um die Befehlsausführungsbedingungen gemäß den angegebenen Einstellungen in der Speichereinheit (24) festzulegen und zu speichern.

8. Aufzeichnungsvorrichtung nach Anspruch 7, wobei die Befehlsausführungsbedingungen auch Ausführungsbedingungen für Befehle umfassen, die von dem mit einer bestimmten Angabe der Aufzeichnungsvorrichtung verbundenen Befehl verschieden sind.

9. Aufzeichnungsvorrichtung nach Anspruch 8, wobei die Befehlsausführungsbedingungen die Ausführbarkeit in jedem Betriebsmodus jedes der Befehle festlegen, die von dem mit einer bestimmten Angabe der Aufzeichnungsvorrichtung verbundenen Befehl verschiedene Befehle umfassen.

10. Aufzeichnungsvorrichtung nach Anspruch 7, wobei die Vorrichtung auf einen Steuerbefehl vom Hostrechner (4) reagiert, um vom normalen Betriebsmodus in den Konfigurationsmodus zu wechseln, indem sie in den Konfigurationsmodus übergeht, falls ermittelt wird, dass der empfangene Befehl zusammen mit auf den Befehl folgenden Daten ein gültiger Befehl ist.

11. Steuerverfahren für eine Aufzeichnungsvorrichtung, die mit einem Hostrechner (4) verbunden werden kann, um Befehle und Daten vom Hostrechner (4) zu empfangen, umfassend als Schritte, die ausgeführt werden, wenn ein Befehl vom Hostrechner (4) empfangen wird, die Schritte zum:
a) Bezugnehmen auf eine Information, die die Befehlsausführbarkeit des empfangenen Befehls anzeigt;
b) Ermitteln auf Grundlage des empfangenen Befehls, ob ein Prozess auszuführen ist oder nicht;
c) Bezugnehmen auf eine Information, die Betriebsmodi der Aufzeichnungsvorrichtung angibt, und
d) Ermitteln, ob der empfangene Befehl im aktuellen Betriebsmodus ausgeführt werden kann;
und
falls das Ergebnis beider Ermittlungsschritte b) und d) ist, dass der empfangene Befehl ausgeführt werden kann,
e) Bezugnehmen auf eine mit dem Befehlsprozess verbundene Information und Ausführen des zugehörigen Prozesses auf Grundlage des Befehls.

12. Steuerverfahren nach Anspruch 11, ferner einen Schritt umfassend zum:
Verwerfen des Befehls, falls mindestens einer der Ermittlungsschritte b) und d) ergibt, dass der Befehlsprozess nicht ausgeführt werden kann.

13. Steuerverfahren für eine Aufzeichnungsvorrichtung nach Anspruch 11, wobei:
die Information in Verbindung mit der Befehlsausführbarkeit durch einen Konfigurationsbefehl festgelegt wird.

14. Steuerverfahren für eine Aufzeichnungsvorrichtung nach Anspruch 11, wobei:
der Konfigurationsbefehl auf den Aufzeichnungsvorrichtungsangaben basiert, die eine mit einer verwendeten Sprache verbundene Information umfassen.

15. Steuerverfahren für eine Aufzeichnungsvorrichtung nach Anspruch 11, wobei:
der Konfigurationsbefehl nur in einem bestimmten Betriebsmodus ausgeführt werden kann.

16. Steuerverfahren für eine Aufzeichnungsvorrichtung nach Anspruch 11, wobei:
das Wechseln zwischen Betriebsmodi durch einen Modusübergangsbefehl ermöglicht wird.

## Revendications

1. Dispositif d'enregistrement qui peut être connecté à un ordinateur hôte (4) pour recevoir des instructions et des données en provenance de l'ordinateur hôte (4), comprenant :
une unité de stockage (24) qui stocke
- des informations spécifiant une pluralité d'instructions et des processus d'instruction associés basés sur la pluralité d'instructions,
- des informations indiquant l'exécutabilité de chaque instruction, et
- des informations spécifiant une pluralité de modes de fonctionnement du dispositif d'enregistrement et indiquant le mode ou les modes de fonctionnement dans lequel ou lesquels une instruction spécifique peut être exécutée ;
et
une unité de commande (21) qui est sensible à une instruction qui est reçue en provenance de l'ordinateur hôte (4) pour faire référence aux informations stockées dans l'unité de stockage (24) indiquant l'exécutabilité d'instruction de l'instruction reçue, pour déterminer s'il faut ou non exécuter un processus correspondant à l'instruction reçue,
pour faire référence aux informations stockées dans l'unité de stockage (24) spécifiant les modes de fonctionnement et pour déterminer si l'instruction reçue peut ou non être exécutée dans le mode de fonctionnement actuel,
l'unité de commande (21) étant en outre sensible au résultat des deux déterminations selon lequel le processus d'instruction peut être exécuté, pour faire référence aux informations stockées dans l'unité de stockage (24) associées au processus d'instruction et pour exécuter le processus associé basé sur l'instruction reçue.

2. Dispositif d'enregistrement selon la revendication 1, dans lequel l'unité de commande (21) est conçue pour écarter l'instruction si au moins l'une des déterminations est que le processus d'instruction ne peut pas être exécuté.

3. Dispositif d'enregistrement selon la revendication 1, dans lequel l'unité de commande (21) est sensible à une instruction de configuration pour définir les informations associées à l'exécutabilité d'instruction stockées dans l'unité de stockage (24).

4. Dispositif d'enregistrement selon la revendication 3, dans lequel l'instruction de configuration est basée sur les spécifications de dispositif d'enregistrement, comprenant des informations associées à une langue utilisée.

5. Dispositif d'enregistrement selon la revendication 3, dans lequel l'exécutabilité d'instruction de l'instruction de configuration est telle que l'instruction de configuration peut être exécutée uniquement dans un mode de fonctionnement spécifique.

6. Dispositif d'enregistrement selon la revendication 1, dans lequel une transition entre modes de fonctionnement est activée par une instruction de transition de mode de fonctionnement.

7. Dispositif d'enregistrement selon l'une quelconque des revendications 1 à 6, dans lequel l'unité de stockage (24) stocke des informations associées à une pluralité d'instructions et des processus d'instruction comprenant des informations associées à une instruction concernant une spécification particulière du dispositif d'enregistrement, et l'unité de commande (21) est conçue pour
exécuter une pluralité de modes de fonctionnement comprenant un mode de fonctionnement normal pour exécuter des processus comprenant un enregistrement, et un mode de configuration pour configurer des paramètres,
commuter depuis le mode de fonctionnement normal vers le mode de configuration en réponse à une instruction de commande spécifique qui est reçue en provenance de l'ordinateur hôte (4), et
répondre à une instruction définissant les conditions d'exécution d'instruction qui est reçue dans le mode de configuration, pour définir et stocker les conditions d'exécution d'instruction selon les paramètres spécifiés dans l'unité de stockage (24).

8. Dispositif d'enregistrement selon la revendication 7, dans lequel les conditions d'exécution d'instruction comprennent également des conditions d'exécution pour des instructions autres que l'instruction associée à une spécification particulière du dispositif d'enregistrement.

9. Dispositif d'enregistrement selon la revendication 8, dans lequel les conditions d'exécution d'instruction définissent l'exécutabilité dans chaque mode de fonctionnement de chacune des instructions, comprenant des instructions autres que l'instruction associée à une spécification particulière du dispositif d'enregistrement.

10. Dispositif d'enregistrement selon la revendication 7, dans lequel le dispositif est sensible à une instruction de commande en provenance de l'ordinateur hôte (4) pour un changement du mode de fonctionnement normal au mode de configuration, en entrant dans le mode de configuration si l'instruction reçue combinée avec des données reçues après l'instruction sont déterminées ensemble comme étant une instruction valide.

11. Procédé de commande pour un dispositif d'enregistrement qui peut être connecté à un ordinateur hôte (4) pour recevoir des instructions et des données en provenance de l'ordinateur hôte (4), comprenant, en tant qu'étapes exécutées lorsqu'une instruction est reçue en provenance de l'ordinateur hôte (4), les étapes consistant à :
a) faire référence à des informations indiquant l'exécutabilité d'instruction de l'instruction reçue ;
b) déterminer s'il faut ou non exécuter un processus sur la base de l'instruction reçue ;
c) faire référence à des informations spécifiant des modes de fonctionnement du dispositif d'enregistrement ; et
d) déterminer si l'instruction reçue peut ou non être exécutée dans le mode de fonctionnement actuel ; et
si le résultat des deux étapes de détermination b) et d) est que l'instruction reçue peut être exécutée,
e) faire référence à des informations associées au processus d'instruction et exécuter le processus associé sur la base de l'instruction.

12. Procédé de commande selon la revendication 11, comprenant en outre une étape consistant à :
écarter l'instruction si au moins l'une desdites étapes de détermination b) et d) est que le processus d'instruction ne peut pas être exécuté.

13. Procédé de commande pour un dispositif d'enregistrement selon la revendication 11, dans lequel :
les informations associées à l'exécutabilité d'instruction sont définies par une instruction de configuration.

14. Procédé de commande pour un dispositif d'enregistrement selon la revendication 11, dans lequel :
l'instruction de configuration est basée sur les spécifications de dispositif d'enregistrement, comprenant des informations associées à une langue utilisée.

15. Procédé de commande pour un dispositif d'enregistrement selon la revendication 11, dans lequel :
l'instruction de configuration peut être exécutée uniquement dans un mode de fonctionnement spécifique.

16. Procédé de commande pour un dispositif d'enregistrement selon la revendication 11, dans lequel :
une transition entre modes de fonctionnement est activée par une instruction de transition de mode.
